# EUROPÄISCHE PATENTSCHRIFT

(11) **EP 1 053 372 B1**
(45) Veröffentlichungstag und Bekanntmachung des Hinweises auf die Patenterteilung: **30.10.2002**
(21) Anmeldenummer: 98909384.4
(22) Anmeldetag: 04.02.1998
(51) Int. Cl.: E02F 3/20, E02F 7/02, E02F 5/12, E02F 5/22

(54) **MASCHINE ZUM UMSETZEN VON MIETEN**
MACHINE FOR DISPLACING GRINDSTONES
MACHINE POUR DEPLACER DES MEULES

(43) Veröffentlichungstag der Anmeldung: 22.11.2000
(73) Patentinhaber: Doppstadt, Werner, D-42555 Velbert (DE)
(72) Erfinder: Doppstadt, Werner, D-42555 Velbert (DE)
(74) Vertreter: Weisse, Jürgen, Dipl.-Phys.
(86) Internationale Anmeldenummer: EP9800580
(87) Internationale Veröffentlichungsnummer: WO99040263

(56) Entgegenhaltungen:
- EP-A- 0 080 802
- GB-A- 2 269 410
- US-A- 1 696 216
- US-A- 2 032 911
- US-A- 3 043 035
- US-A- 4 109 336
- US-A- 4 258 486

## Beschreibung

### Technisches Gebiet

Die Erfindung betrifft eine Maschine zum Umsetzen von Mieten mit einer Fräseinrichtung, die in einer Fahrtrichtung seitlich längs einer Miete geführt wird und durch welche bei jedem Durchgang eine Materialschicht von der Miete abfräsbar ist, und mit einer Fördervorrichtung, auf welche das abgefräste Material fällt, zur Deponierung des Materials an einer gegenüber der abgefrästen Miete versetzten Stelle.

Speziell betrifft die Erfindung das Umsetzen von Mieten aus biologischem Abfall wie Ast- und Strauchwerk oder Biomüll.

### Stand der Technik

Biologischer Abfall wird in Mieten aufgeschüttet, um schließlich zu Humus zu verrotten. Das sind Mieten von mehreren Metern Höhe, mehreren Metern Breite und häufig Hunderten von Metern Länge. Das verrottbare Material muß von Zeit zu Zeit umgesetzt werden, um der Miete wieder Luftsauerstoff zuzuführen und dadurch den Verrottungs-Vorgang zu fördern. Wenn eine solche Umsetzung nicht erfolgt, wird die Verrottung verzögert. Außerdem bilden sich anaerobe Zonen, in denen eine Verrottung unter starker Geruchsbelästigung erfolgt.

Nach mehrmaligem Umsetzen in Zeitabständen, die von der Art des Materials abhängen, ist das Material in den Mieten weitgehend zu Humus verrottet. Das Material wird dann einer Siebmaschine zugeführt. Dabei werden nicht-verrottete Teile ausgesondert. Es werden weiterhin Kunststoff-Teile oder -Folien abgeschieden. Die nicht-verrotteten Teile werden den neu aufgeschichteten Mieten wieder zugesetzt. Die durchgesiebte, verrottete Erde kann in Säcke abgefüllt und verkauft werden.

Es sind verschiedene Maschinen vorgesehen worden, durch welche dieses Umsetzen der Mieten maschinell vorgenommen werden soll.

GB-A-2269410 zeigt eine gattungsgemäße Maschine zum Umsetzen von Mieten.

Bei einer weiteren bekannten Art von Maschinen wird eine z.B. fünf Meter breite Miete von der Stirnseite her aufgenommen. Dazu ist ein Fahrzeug vorgesehen, dessen Räder seitlich von der Miete fahren und welches das Material vorn aufnimmt und über das Fahrzeug hinwegfördert, so daß das Material hinter dem Fahrzeug wieder abgelegt wird. Ein solches Fahrzeug ist sehr aufwendig. Zu beiden Seiten der Miete müssen Freiflächen belassen werden. Das Fahrzeug ist ein Einzweck-Fahrzeug, das für andere Zwecke nicht verwendbar ist.

Bei einer anderen Art von Maschinen wird eine Trommel, die um eine vertikale Umlaufachse umläuft, längs der Miete geführt. Schneidwerkzeuge auf dem Umfang der Trommel lösen dann Schichten von der Miete ab. Das abgelöste Material fällt auf eine Fördervorrichtung und wird an einer gegenüber der ursprünglichen Miete versetzten Stelle als neue Miete wieder abgelegt. Mit solchen Geräten läßt sich jeweils nur eine recht dünne Schicht von der Miete abfräsen. Wenn die Trommel zu weit auf die Miete hin gedrückt wird, dann wird die Reaktionskraft zu groß. Die Maschine wird wieder zurückgedrückt. Ein weiterer Nachteil dieser bekannten Maschine besteht darin, daß durch die Fräs-Trommel Kunststoff-Folien, die sich häufig in dem aufgeschütteten Material befinden, so stark zerkleinert werden, daß sie später nicht mehr von der durch die Verrottung gebildeten Erde getrennt werden können.

Die Lebensdauer der bekannten Maschinen ist stark begrenzt.

Die bekannten Maschinen haben sich in der Praxis nicht bewährt.

### Offenbarung der Erfindung

Der Erfindung liegt die Aufgabe zugrunde, eine Maschine zum Umsetzen von Mieten so auszubilden, daß sie einen hohen Duchsatz (umgesetztes Material pro Zeiteinheit) ermöglichen, keinen Zusatzraum zwischen den Mieten notwendig macht und eine hohe Lebensdauer ermöglicht.

Erfindungsgemäß wird diese Aufgabe dadurch gelöst, daß die Fräsreinrichtung zwei seitlich angeordnete, umlaufende Fräsköpfe aufweist, deren Umlaufachsen im wesentlichen in Fahrtrichtung verlaufen oder mit der Fahrtrichtung einen spitzen Winkel bilden.

Mit den Fräsköpfen wird die Maschine, üblicherweise mittels eines Trägerfahrzeugs, an der Miete entlanggeführt. Dabei schneiden die Fräsköpfe im wesentlichen in Fahrtrichtung in das Material der Miete ein. Der auf die Fräsköpfe wirkende Widerstand wirkt dabei entgegen der Fahrtrichtung, also nicht quer zu Fahrtrichtung. Durch die beiden Fräsköpfe kann bei jedem Durchgang ein breiter, wenigstens dem Radius der Fräsköpfe entsprechender Streifen von der Miete abgefräst werden. Das Abfräsen kann auch quer zur Aufschüttrichtung der Mieten erfolgen. Die Fräsköpfe können sehr robust ausgebildet werden und sind in Längsrichtung ihrer Achsen beansprucht. Damit ist eine lange Lebensdauer gewährleistet.

Bei einer vorteilhaften Ausbildung der Erfindung sind die Fräsköpfe scheiben- oder tellerförmig. Dabei können die Fräsköpfe jeweils einen in Fahrtrichtung gewölbten Teller bilden, der auf seiner Vorderseite mit Fräskörpern versehen ist. Zweckmäßigerweise sind die Fräsköpfe kegelstumpfförmig. Die Fräsköpfe sind übereinander angeordnet. Eine durch die Umlaufachsen der Fräsköpfe verlaufende Ebene ist in Richtung auf die Miete hin um einen Winkel geneigt, der ein Einbrechen Miete in der Fräsebene verhindert. Die Fräsköpfe sind auf einem von der Miete abgewandten Teil durch eine Haube abgedeckt, durch welche das abgefräste Material auf die Fördervorrichtung geleitet wird. Die Fräsköpfe laufen gleichsinnig um. Die beschriebene Konstruktion gestattet es, daß die Fräsköpfe mit einer Drehzahl von mehr als 100 UpM umlaufen.

Vorteilhafterweise sind Mittel zum Zuführen von Wasser zu dem auf der Fördervorrichtung geförderten Material vorgesehen.

Die Maschine ist von der Zapfwelle eines Trägerfahrzeugs antreibbar. Das Zügfahrzeug kann dann auch für andere Zwecke eingesetzt werden.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine schematische Seitenansicht einer Maschine zum Umsetzen von Mieten, die an einem Trägerfahrzeug angebracht ist.
- Fig.2: ist eine Vorderansicht der Maschine von links in Fig.1 gesehen.
- Fig.3: ist eine abgebrochene Draufsicht der Maschine und des Trägerfahrzeugs von Fig.1.
- Fig.4: zeigt schematisch ein Schaufelblatt bei einer Maschine nach Fig.1 bis 3.

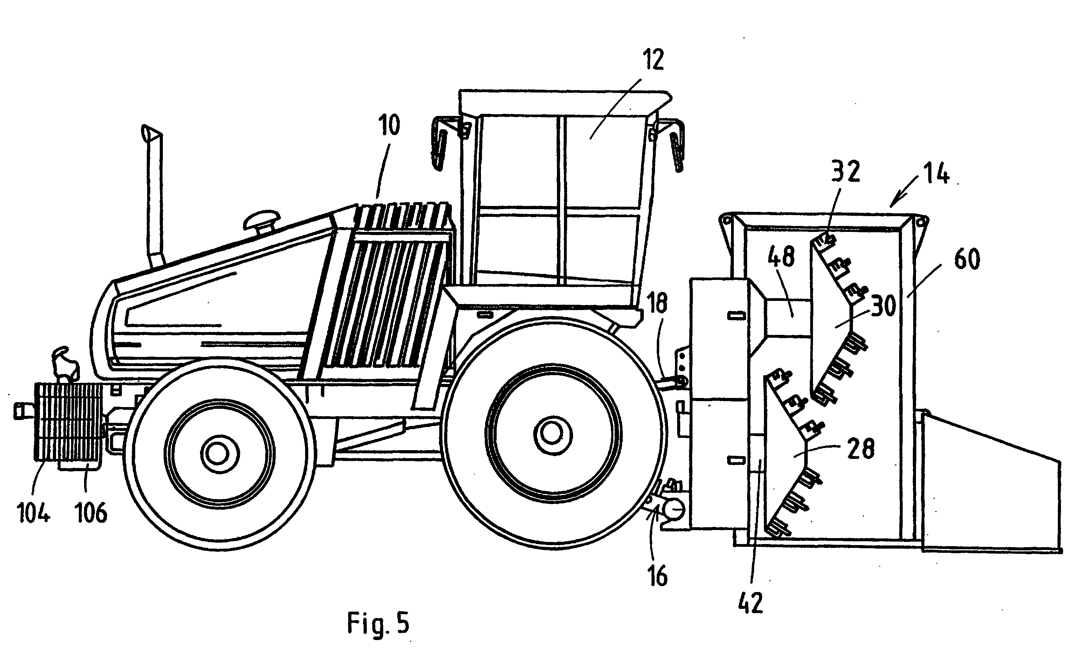

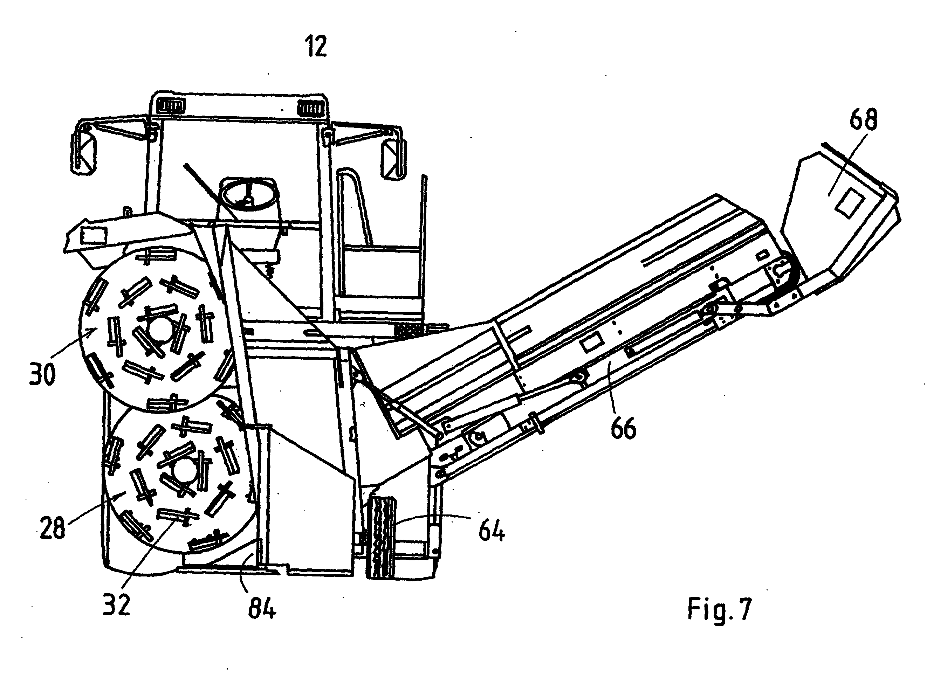

- Fig.5: zeigt ähnlich wie Fig.1 eine Seitenansicht der Maschine mit Trägerfahrzeug aber in konstruktiver Darstellung von links in Fig.7 gesehen.

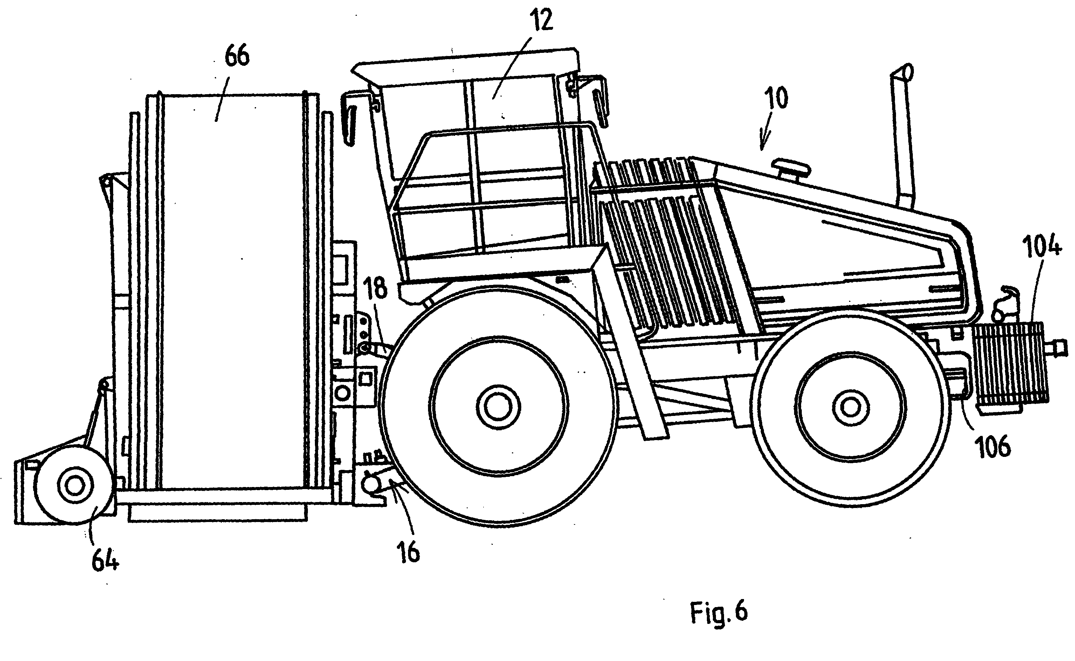

- Fig.6: zeigt ähnlich wie Fig.5 eine Seitenansicht der Maschine und des Trägerfahrzeugs im Fahrbetrieb mit hochgezogener Maschine und hochgeschwenktem Förderband. aber von der entgegengesetzten Seite, d.h. von rechts in Fig.7, her gesehen
- Fig.7: zeigt eine Vorderansicht der Maschine und des Trägerfahrzeugs.

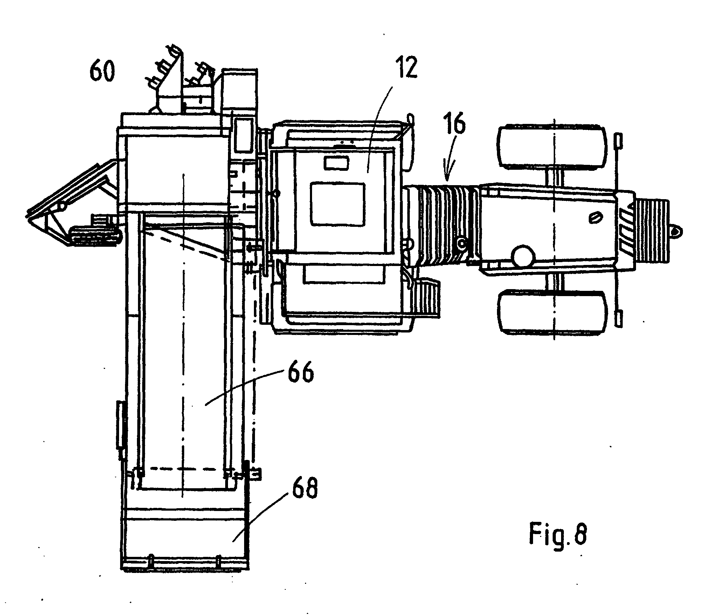

- Fig.8: zeigt eine Draufsicht der Maschine und des Trägerfahrzeugs.
- Fig.9: ist eine teilweise auseinandergezogene, perspektivische Darstellung der Gehäuse-Anbauten der Maschine von Fig.1 bis 8.

### Beschreibung einer bevorzugten Ausführung der Erfindung

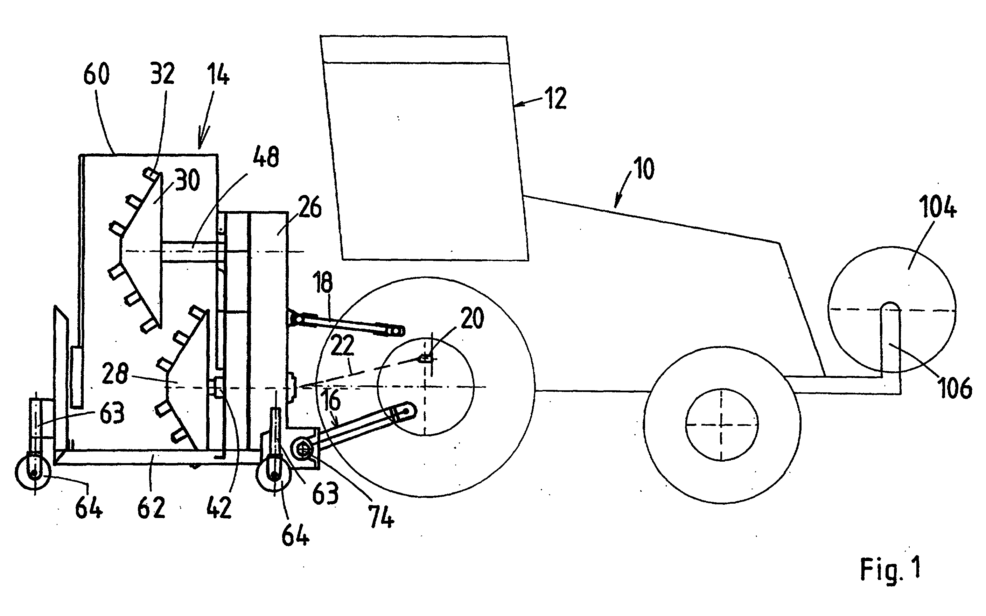

In Fig.1 ist mit 10 ein Trägerfahrzeug bezeichnet. Das Trägerfahrzeug ist ein schwerer Traktor mit einer um 180° schwenkbaren Fahrerkabine 12. Im Betrieb zum Umsetzen einer Miete fährt das Trägerfahrzeug nach links in Fig.1. Das Trägerfahrzeug 10 trägt eine Maschine zum Umsetzen von Mieten, die generell mit 14 bezeichnet ist. Die Maschine 14 ist an dem Trägerfahrzeug 10 mittels einer üblichen Dreipunktaufhängung 16 und eines Stoßdämpfers 18 gehaltert. Die Maschine 14 wird von dem Trägerfahrzeug 10 über eine Zapfwelle 20 und eine Gelenkwelle 22 angetrieben. Die Gelenkwelle 22 ist mit einer Eingangswelle 24 eines Getriebes 26 verbunden. Das Getriebe 26 treibt zwei übereinander angeordnete Fräsköpfe 28 und 30.

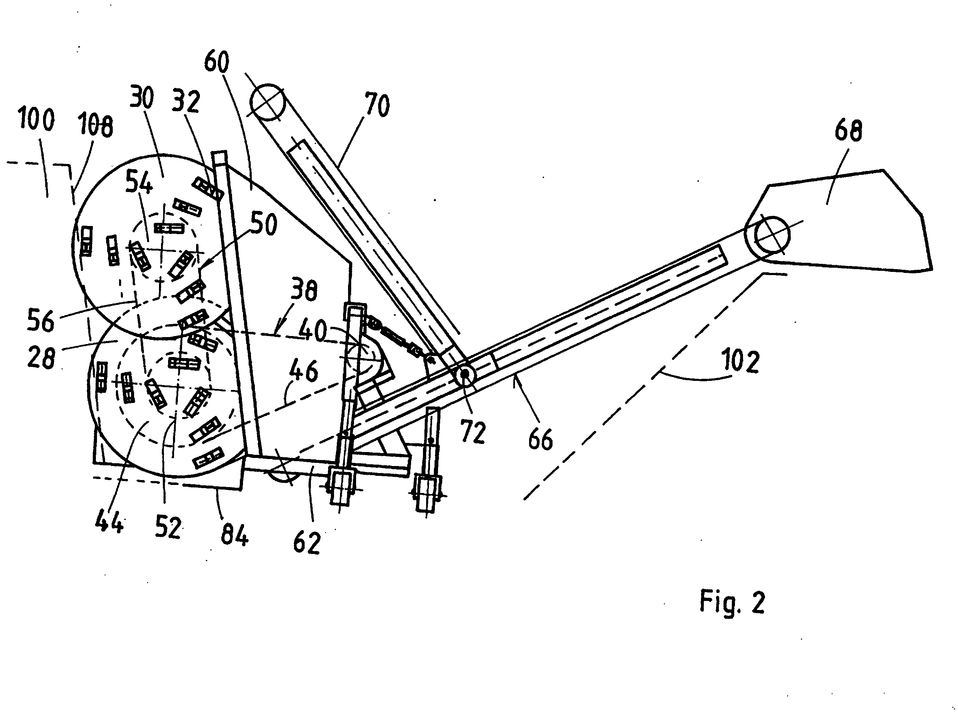

Die Fräsköpfe sind scheiben- oder tellerförmig mit flach-kegelstumpfförmiger Grundform und nach vorn hin, in Fahrtrichtung gewölbt Auf der dem Trägerfahrzeug 10 abgewandten, gewölbten Vorderseite tragen die Fräsköpfe Schneidkörper 32. Die Fräsköpfe 28 und 30 sind um horizontale, parallel zur Fahrtrichtung verlaufende Achsen 34 und 36 drehbar. Die Fräsköpfe 28 und 30 werden über das Getriebe 26 gleichsinnig mit hoher Drehzahl von über 100 UpM angetrieben. Wie aus Fig.2 ersichtlich ist, enthält das Getriebe 26 einen ersten Kettentrieb mit einem auf der Eingangswelle 24 sitzenden Kettenrad 40 und einem auf der Welle 42 des unteren Fräskopfes 28 sitzenden Kettenrad 44 von größerem Durchmesser sowie einer endlosen Kette 46. Damit wird der untere Fräskopf 28 untersetzt von der Eingangswelle 24 und damit von der Zapfwelle 20 des Trägerfahrzeuges 10 angetrieben. Die Welle 42 des unteren Fräskopfes 28 ist mit der Welle 48 über einen Kettentrieb 50 gekuppelt. Auf der Welle 42 des unteren Fräskopfes 28 sitzt ein weiteres Kettenrad 52. Das Kettenrad 52 ist mit einem Kettenrad 54, das auf der Welle 48 des oberen Fräskopfes 30 sitzt, über eine Kette 56 verbunden.

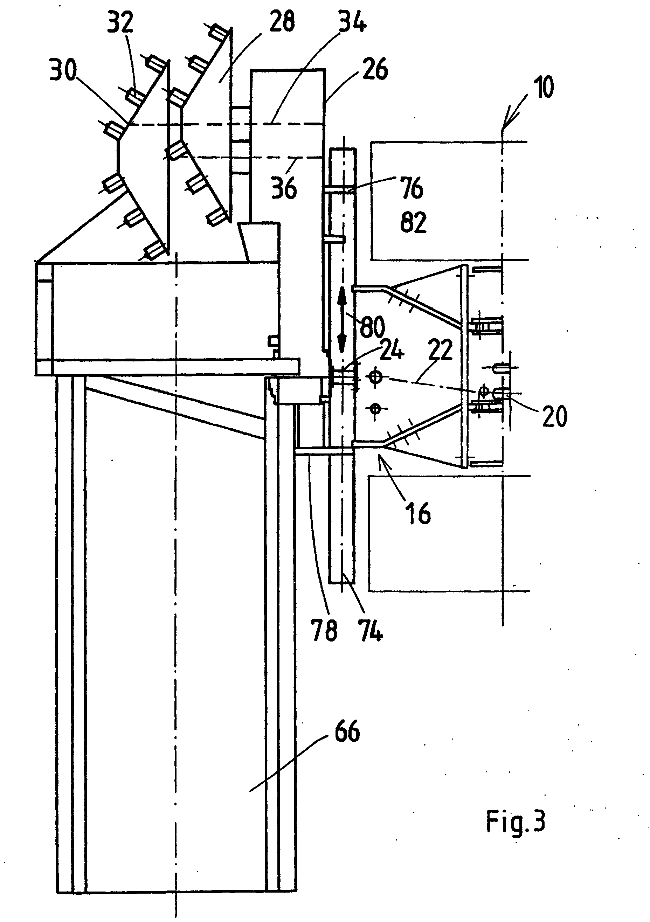

Wie aus Fig.2 und 3 ersichtlich ist, sitzt der obere Fräskopf 30 in Fahrtrichtung etwas vor dem unteren Fräskopf 28. Wie aus Fig.2 und 3 ersichtlich ist, sind die beiden Fräsköpfe 28 und 30 seitlich von dem Trägerfahrzeug 10 angeordnet. Der obere Fräskopf 30 steht dabei etwas weiter zur Seite vor als der untere Fräskopf 28.

Eine Haube 60 erstreckt sich auf der Innenseite teilweise über die Fräsköpfe 28 und 30. Die Haube 60 sitzt auf einem Chassis 62. Das Chassis 62 trägt auch das Getriebe 26 mit den Fräsköpfen 28 und 30. Das Chassis 62 ist über Federn 63 auf Stützrollen 64 abgestützt. Das Chassis 62 ist über die Dreipunktaufhängung 16 an dem Trägerfahrzeug 10 angebracht. Dabei ist die Maschine hydraulisch auf dem Trägerfahrzeug 10 abgestützt, so daß der überwiegende Teil des Maschinengewichts von den Rädern des Trägerfahrzeugs 10 aufgenommen wird. Die Haube ist nach unten hin offen. Unterhalb der Haube 60 erstreckt sich ein Förderband 66. Das Förderband 66 erstreckt sich von dem Chassis 62 schräg nach oben quer zur Fahrtrichtung und zu der den Fräsköpfen abgewandten Seite der Maschine 14 hin. Am äußeren Ende des Förderbandes 66 ist eine nach unten offene Prallhaube 68 angebracht.

Wie in Fig.2 angedeutet ist, ist ein Teil 70 des Förderbandes 66 für Transportzwecke um eine Achse 72 nach oben einschwenkbar.

An dem Trägerfahrzeug 10 ist ein Führungsglied 74 über die Unterlenker der Dreipunktaufhängung quer zur Fahrtrichtung gehaltert. Die Maschine ist mit einer Führung verschiebbar an dem Führungsglied 74 geführt. Durch einen Stellmotor ist die Maschine an dem Führungsglied 74 relativ zu dem Trägerfahrzeug 10 aus einer Betriebsposition mit seitlich vorstehenden Fräsköpfen 28 und 30 (Fig.3) in eine eingezogene Fahrposition verschiebbar, in welcher sich die Fräsköpfe 28 und 30 innerhalb eines für Fahrbetrieb zulässigen Profils befinden. Dabei ist das Führungsglied 74 ein Rohr, auf welchem die Maschine mit die Führung bildenden, um das Rohr greifenden Ansätzen 76 und 78 geführt ist. In dem Rohr ist ein hydraulischer Stellzylinder angeordnet, der in Fig.3 durch einen Doppelpfeil 80 angedeutet ist. Der Stellzylinder 80 greift über einen Mitnehmer 82 durch einen Längsschlitz des Rohres hindurch an der verschiebbaren Maschine an.

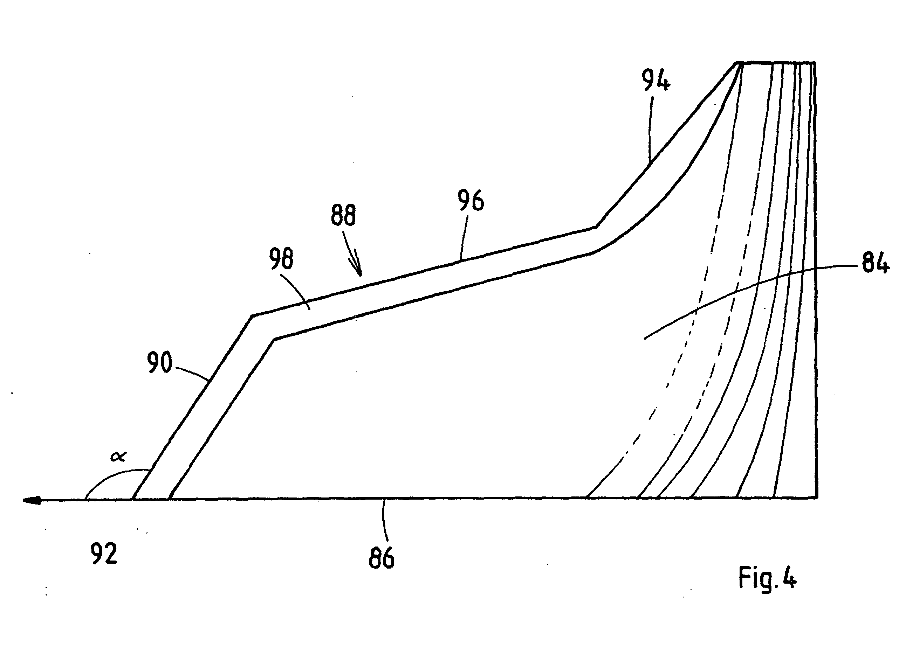

Unterhalb der Fräsköpfe 28 und 30 ist ein über den Boden geführtes Schaufelblatt 84 zur Aufnahme von heruntergefallenem Material angeordnet. Das Schaufelblatt 84 erstreckt sich mit einer Ablaufkante 86 (Fig.4) über die Fördervorrichtung 66, so daß aufgenommenes Material auf die Fördervorrichtung 66 geschoben wird.

Zu diesem Zweck weist die Vorderkante 88 des Schaufelblatts 84 einen ersten, vorderen Abschnitt 90 im Bereich des oberen Fräskopfes 30 auf, der mit der Fahrtrichtung 92 einen stumpfen Winkel α bildet, einen zweiten, hinteren Abschnitt 94 im Bereich des unteren Fräskopfes 28 , der ebenfalls mit der Fahrtrichtung 92 einen stumpfen Winkel bildet, und einen den ersten und den zweiten Abschnitt 90 bzw. 94 verbindenden dritten, mittleren Abschnitt 96. Das Schaufelblatt 84 weist eine Ablaufkante 86 (Fig.4) auf, die sich parallel zur Fahrtrichtung 92 über die Fördervorrichtung 66 erstreckt. Das Schaufelblatt 84 ist, wie in Fig.4 angedeutet, so gekrümmt, daß es aufgenommenes Material zu der Ablaufkante 86 leitet. Die Vorderkante 88 ist in einem Bereich 98 (Fig.4) angeschärft.

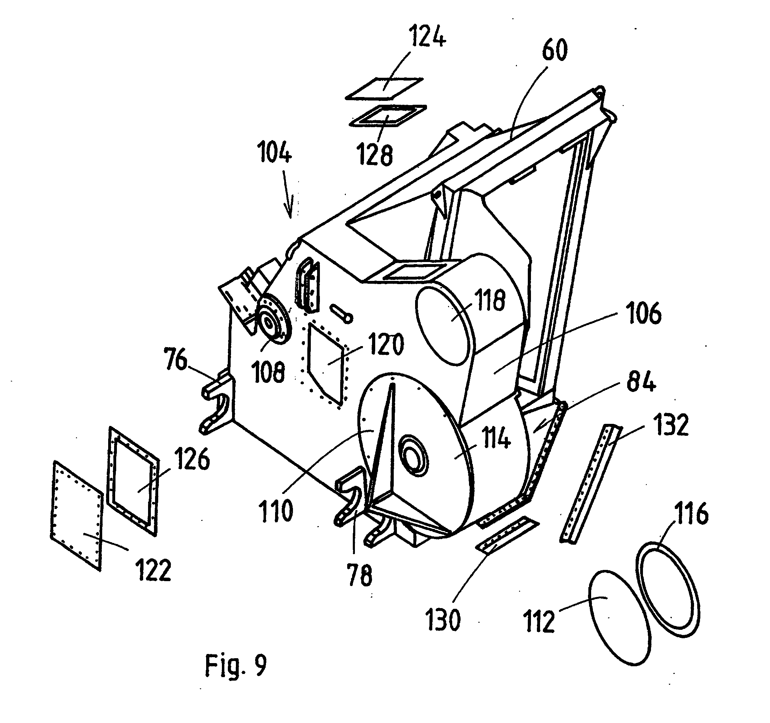

Fig.9 zeigt in perspektivischer, teilweise auseinandergezogener Darstellung den Gehäuseaufbau der Maschine.

Das Gehäuse 104 umfaßt ein Getriebegehäuse 106 und die Haube 60. In dem Getriebegehäuse 106 sind das Kettenrad 40, die gleichachsigen Kettenräder 44 und 52 und das Kettenrad 54 gelagert. Die Kettenräder 44 und 52 und das Kettenrad 54 sitzen suf den Wellen 42 und 48 der Fräsköpfe 28 bzw. 30. Das Kettenrad 40 ist in Lagern im Getriebegehäuse 106 gelagert.Die Lager der Wellen 42 und 48 sitzen in Lagerschilden 110 bzw. 112. Die Lagerschilde 110 bzw 112 schließen unter Zwischenlage von Dichtungen 114 bzw. 116 Durchbrüche wie 118 in dem Lagergehäuse 104 ab. Das Getriebe ist durch Wartungsöffnungen wie 120 zugänglich, die durch lösbare Platten 122 bzw. 124 unter Zwischenlage von Dichtungen 126 bzw 128 verschlossen sind.

An dem Getriebegehäuse 104 sind die Ansätze 76 und 78 angebracht.

An das Schaufelblatt 84 sind an der Vorderkante 88 angeschärfte Leisten 130 und 132 angeschraubt. Die Leisten stellen Verschleißteile dar und können leicht ausgetauscht werden.

### Die beschriebene Maschine arbeitet wie folgt:

Das Trägerfahrzeug 10 fährt an einer zu versetzenden Miete entlang. Dabei fräsen die Fräsköpfe 28 und 30 einen breiten Streifen von der Miete 100 ab, dessen Breite in der Größenordnung des Radius der Fräsköpfe 28 und 30 liegt. Das abgefräste Material wird von den mit hoher Drehzahl umlaufenden Fräsköpfen 28 und 30 gegen die Haube 60 geschleudert und fällt auf das Förderband 66. Das Förderband 66 transportiert das Material quer zur Fahrtrichtung und legt es an einer gegenüber der ursprünglichen Miete 100 versetzten Stelle ab, wie in Fig.2 durch die gestrichelte Linie 102 angedeutet ist. Dabei wird das Material wieder mit Luft durchmischt. Außerdem kann über einen Schlauch, der von einer Schlauchtrommel 104 abgewickelt wird, Wasser von einem stationären Anschluß auf eine Leitung 106 gegeben werden, über welche das Material auf dem Förderband 66 besprüht wird. Das ist in den Zeichnungen nicht dargestellt.

Durch die Fräsköpfe 28 und 30 wird die Miete 100 bis zu einer Fräsebene 108 abgefräst, die parallel zu einer durch die Umlaufachsen der Fräsköpfe 28 und 30 gehenden Ebene verläuft. Dadurch, daß der obere Fräskopf 30 gegenüber dem unteren Fräskopf 28 nach außen, d.h. zu der Miete 100 hin vorsteht, ist diese Ebene etwas nach außen geneigt. Dementsprechend ist auch die Fräsebene 108, von rechts in Fig.2 gesehen, etwas nach hinten geneigt. Das verhindert, daß das Material in der Fräsebene einbrechen kann, wie das bei einer senkrechten Fräsebene der Fall sein könnte. Im gleichen Sinn wirkt die Tatsache, daß der obere Fräskopf 30 gegenüber dem unteren Fräskopf 28 in Fahrtrichtung vorsteht. Es wird erst das Material oben abgenommen und auf das Förderband 66 geschleudert und dann erst das Material der darunterliegenden Schichten.

Das Schaufelblatt 84 nimmt heruntergefallenes Material auf und leitet dieses Material über die Ablaufkante 86 und die Fördervorrichtung 66 ebenfalls auf die neu aufgeschüttete Miete 102. Dadurch wird verhindert, daß sich auf dem Boden eine bleibende Grundschicht von heruntergefallenem Material bildet, die anaerob verrotten und zu Geruchsbelästigung führen kann. Dadurch, daß das Gewicht der Maschine von etwa 40 kN überwiegend auf den Rädern des Trägerfahrzeugs abgestützt ist und die Stützrollen das Restgewicht von wenigen kN aufnehmen, wird sichergestellt, daß das Schaufelblatt 84 nicht mit seiner angeschärften Vorderkante in den Boden, z.B. Asphalt, einschneidet.

Die Maschine kann gegenüber dem Trägerfahrzeug so verfahren werden, daß sich die Fräsköpfe 28 und 30 innerhalb des für Fahrbetrieb auf der Straße zulässigen Seitenprofils befinden. Nach Einschwenken der Fördervorrichtung 66 und Drehen der Fahrerkabine 12 kann dann das Trägerfahrzeug 10 mit der daran aufgehängten Maschine auf der Straße fahren.

Die im Betrieb auf die Fräsköpfe 28 und 30 wirkenden Reaktionskräfte wirken entgegen der Fahrtrichtung. Diese Reaktionskräfte können daher die Maschine und das Trägerfahrzeug 10 nicht von der Miete wegdrücken. Es wird bei jedem Durchgang ein relativ breiter Streifen von der Miete abgefräst. Das ergibt einen hohen Durchsatz. Die beschriebenen Fräsköpfe 28 und 30 zerreißen im Material enthaltene Kunststoff-Folien nicht in so kleine Teile, daß ein Abtrennen derselben bei dem abschließenden Siebvorgang nicht möglich wäre. Die Maschine gestattet ein Abfräsen des Materials von der Stirnfläche einer breiten Miete. Es brauchen keine breiten Zwischeriräume zwischen langgestreckten, dachförmigen Mieten für den Durchgang der Maschine und des Trägerfahrzeugs freigelassen zu werden. Dadurch wird eine bessere Ausnutzung der verfügbaren Bodenfläche gewährleistet.

## Patentansprüche

1. Maschine zum Umsetzen von Mieten mit einer Fräseinrichtung (28,30), die in einer Fahrtrichtung seitlich längs einer Miete geführt wird und durch welche bei jedem Durchgang eine Materialschicht von der Miete abfräsbar ist, und mit einer Fördervorrichtung (66), auf welche das abgefräste Material fällt, zur Deponierung des Materials an einer gegenüber der abgefrästen Miete versetzten Stelle **dadurch gekennzeichnet, daß** die Fräsreinrichtung zwei seitlich angeordnete, umlaufende Fräsköpfe (28,30) aufweist, deren Umlaufachsen (34,36) im wesentlichen in Fahrtrichtung verlaufen oder mit der Fahrtrichtung einen spitzen Winkel bilden.

2. Maschine nach Anspruch 1, **dadurch gekennzeichnet, daß** die Fräsköpfe (28,30) scheiben- oder tellerförmig sind.

3. Maschine nach Anspruch 2, **dadurch gekennzeichnet, daß** die Fräsköpfe (28,30) jeweils einen in Fahrtrichtung gewölbten Teller bilden, der auf seiner Vorderseite mit Fräskörpern (32) versehen ist.

4. Maschine nach Anspruch 3, **dadurch gekennzeichnet, daß** die Fräsköpfe (28,30) kegelstumpffürmig sind.

5. Maschine nach einem der Ansprüche 1 bis 4, **dadurch gekennzeichnet, daß** die Fräsköpfe (28,30) übereinander angeordnet sind.

6. Maschine nach Anspruch 5, **dadurch gekennzeichnet, daß** eine durch die Umlaufachsen (34,36) der Fräsköpfe (28,30) verlaufende Ebene in Richtung auf die Miete hin um einen Winkel geneigt ist, der ein Einbrechen der Miete in der Fräsebene (76) verhindert.

7. Maschine nach Anspruch 5 oder 6, **dadurch gekennzeichnet, daß** der obere der beiden Fräsköpfe (30) gegenüber dem unteren Fräskopf (28) entgegen der Fahrtrichtung versetzt ist.

8. Maschine nach einem der Ansprüche 1 bis 7, **dadurch gekennzeichnet, daß** die Fräsköpfe (28,30) auf einem von der Miete abgewandten Teil durch eine Haube (60) abgedeckt sind, durch welche das abgefräste Material auf die Fördervorrichtung (66) geleitet wird.

9. Maschine nach einem der Ansprüche 1 bis 8, **dadurch gekennzeichnet, daß** die Fräsköpfe (28,30) gleichsinnig umlaufen.

10. Maschine nach Anspruch 9, **dadurch gekennzeichnet, daß** die Fräsköpfe (28,30) mit einer Drehzahl von mehr als 100 UpM umlaufen.

11. Maschine nach einem der Ansprüche 1 bis 10, **gekennzeichnet durch** Mittel zum Zuführen von Wasser zu dem auf der Fördervorrichtung geförderten Material.

12. Maschine nach einem der Ansprüche 1 bis 11, **dadurch gekennzeichnet, daß** die Maschine als eine antriebslose Einheit ausgebildet ist, die an einem Trägerfahrzeug (10) gehaltert und von der Zapfwelle (20) des Trägerfahrzeugs (10) antreibbar ist.

13. Maschine nach Anspruch 12, **dadurch gekennzeichnet, daß**
(a) an dem Trägerfahrzeug (10) ein Führungsglied (74) quer zur Fahrtrichtung gehaltert ist,
(b) die Maschine mit einer Führung verschiebbar an dem Führungsglied (74) geführt ist und
(c) ein Stellmotor (80) vorgesehen ist, durch welchen die Maschine an dem Führungsglied relativ zu dem Trägerfahrzeug aus einer Betriebsposition mit seitlich vorstehenden Fräsköpfen (28,30) in eine eingezogene Fahrposition verschiebbar sind, in welcher sich die Fräsköpfe (28,30) innerhalb eines für Fahrbetrieb zulässigen Profils befinden.

14. Maschine nach Anspruch 13, **dadurch gekennzeichnet, daß**
(a) das Führungsglied (74) ein Rohr ist, auf welchem die Maschine mit um das Rohr greifenden Ansätzen (76,78) geführt ist,
(b) in dem Rohr ein hydraulischer Stelizylinder (80) angeordnet ist und
(c) der Stellzylinder (80) durch einen Längsschlitz des Rohres hindurch an der verschiebbaren Maschine angreift.

15. Maschine nach Anspruch 14, **dadurch gekennzeichnet, daß** die Fördervorrichtung (66) zu Transportzwecken einschwenkbar ist

16. Maschine nach einem der Ansprüche 1 bis 15, **dadurch gekennzeichnet, daß** unterhalb der Fräsköpfe (28,30) ein über den Boden geführtes Schaufelblatt (84) zu Aufnahme von heruntergefallenem Material angeordnet ist

17. Maschine nach Anspruch 16, **dadurch gekennzeichnet, daß** das Schaufelblatt (84) sich mit einer Ablaufkante (86) über die Fördervorrichtung (66) erstreckt, so daß aufgenommenes Material auf die Fördervorrichtung (66) geschoben wird.

18. Maschine nach Anspruch 16 oder 17, **dadurch gekennzeichnet, daß** die Maschine hydraulisch auf dem Trägerfahrzeug (10) abgestützt ist, so daß der überwiegende Teil des Maschinengewichts von den Rädern des Trägerfahrzeugs (10) aufgenommen wird.

19. Maschine nach Anspruch 18, **dadurch gekennzeichnet, daß** an der Maschine auf dem Boden laufende Stützrollen (64) vorgesehen sind, durch welche das Restgewicht der Maschine aufgenommen wird.

20. Maschine nach Anspruch 19, **dadurch gekennzeichnet, daß** die Maschine über Federn (63) auf den Stützrollen (64) abgestützt ist.

21. Maschine nach den Ansprüchen 7 und 16, **dadurch gekennzeichnet, daß** die Vorderkante (88) des Schaufelblattes (84) entsprechend dem Längsversatz der Fräsköpfe (28,30) gestuft ist.

22. Maschine nach Anspruch 21, **dadurch gekennzeichnet, daß** die Vorderkante (88) des Schaufelblattes (84) angeschärft ist.

23. Maschine nach Anspruch 22, **dadurch gekennzeichnet, daß** die Vorderkante (88) des Schaufelblatts (84) einen ersten, vorderen Abschnitt (90) im Bereich des oberen Fräskopfes (30) aufweist, der mit der Fahrtrichtung (92) einen stumpfen Winkel (α) bildet, einen zweiten, hinteren Abschnitt (94) im Bereich des unteren Fräskopfes (28), wobei dieser Abschnitt (94) ebenfalls mit der Fahrtrichtung (92) einen stumpfen Winkel bildet, und einen den ersten und den zweiten Abschnitt (90,94) verbindenden dritten, mittleren Abschnitt (96).

24. Maschine nach Anspruch 23, **dadurch gekennzeichnet, daß**
(a) das Schaufelblatt (84) eine Ablaufkante (86) aufweist, die sich parallel zur Fahrtrichtung (92) über die Fördervorrichtung (66) erstreckt, und
(b) das Schaufelblatt (84) so gekrümmt ist, daß es aufgenommenes Material zu der Ablaufkante (86) leitet.

## Claims

1. Machine for dislocating stacks with a milling cutter (28,30), which is laterally guided along a stack in a driving direction and through which a layer of material is removable from the stack through milling during each passage, the machine having a conveying device (66), onto which the material removed by milling drops and which is used to deposit the material in an area offset from the milled stack, **characterized in that** the milling cutter has two lateral rotating milling heads (28, 30), the rotation axes (34, 36) of which extend substantially in the driving direction or form an acute angle relative to the driving direction.

2. Machine as set forth in claim 1, **characterized in that** the milling heads (28, 30) are disc- or plate-shaped.

3. Machine as set forth in claim 2, **characterized in that** each one of the milling heads (28, 30) forms a plate vaulted in the driving direction and provided with milling bodies (32) at its front side.

4. Machine as set forth in claim 3, **characterized in that** the milling heads (28, 30) are truncated cone-shaped.

5. Machine as set forth in anyone of claims 1 to 4, **characterized in that** the milling heads (28, 30) are arranged one above the other.

6. Machine as set forth in claim 5, **characterized in that** a plane extending through the rotation axes (34, 36) of the milling heads (28, 30) is inclined towards the stack by an angle which prevents the stack from collapsing in the milling plane (76).

7. Machine as set forth in claim 5 or 6, **characterized in that** the upper one of the two milling heads (30) is offset in a direction opposed to the driving direction relative to the lower milling head (28).

8. Machine as set forth in anyone of claims 1 to 7, **characterized in that** the milling heads (28, 30), on a portion remote from the stack, are covered by a cap (60) which guides the material removed by milling to the conveying device (66).

9. Machine as set forth in anyone of claims 1 to 8, **characterized in that** the milling heads (28, 30) rotate in the same direction.

10. Machine as set forth in claim 9, **characterized in that** the milling heads (28, 30) rotate with a rotary speed of more than 100 rpm.

11. Machine as set forth in anyone of claims 1 to 10, **characterized by** means for supplying water to the material transported on the conveying device.

12. Machine as set forth in anyone of claims 1 to 11, **characterized in that** the machine is constructed as a unit without driving means, the unit being supported on a carrier vehicle (10) and being arranged to be driven by the power take-off shaft (20) of the carrier vehicle (10).

13. Machine as set forth in claim 12, **characterized in that**
(a) a guiding member (74) is supported on the carrier vehicle (10) transversely to the driving direction,
(b) the machine is displaceably guided with a guide on the guiding member (74), and
(c) a servomotor (80) is provided, which is arranged to displace the machine on the guiding member relative to the carrier vehicle from an operating position with the milling heads (28, 30) extending laterally into a retracted driving position, in which the milling heads (28, 30) are located within a profile allowed for driving operation.

14. Machine as set forth claim 13, **characterized in that**
(a) the guiding member (74) is a tube, on which the machine is guided with projections (76, 78) extending around the tube,
(b) a hydraulic control cylinder (80) is arranged in the tube, and
(c) the control cylinder (80) engages the displaceable machine through a longitudinal slot in the tube.

15. Machine as set forth in claim 14, **characterized in that** the conveying device (66) is adapted to be pivoted inwards for transport.

16. Machine as set forth in anyone of claims 1 to 15, **characterized in that** a shovel pan (84) for taking up dropped material is arranged below the milling heads (28, 30) and guided over the ground.

17. Machine as set forth in claim 16, **characterized in that** the shovel pan (84) extends with a outlet edge (86) over the conveying device (66), such that material being taken up is pushed onto the conveying device (66).

18. Machine as set forth in claims 16 or 17, **characterized in that** the machine is hydraulically supported on the carrier vehicle (10), such that the major portion of the machine weight is supported by the wheels of the carrier vehicle (10).

19. Machine as set forth in claim 18, **characterized in that** supporting rollers (64) running on the ground are provided at the machine, through which the remaining weight of the machine is supported.

20. Machine as set forth in claim 19, **characterized in that** the machine is supported on the supporting rollers (64) through springs (63).

21. Machine as set forth in claims 7 and 16, **characterized in that** the front edge (88) of the shovel pan (84) is stepped corresponding to the longitudinal offset of the milling heads (28, 30).

22. Machine as set forth in claim 21, **characterized in that** the front edge (88) of the shovel pan (84) is scarfed.

23. Machine as set forth in claim 22, **characterized in that** the front edge (88) of the shovel pan (84) has a first front section (90) in the area of the upper milling head (30), the first front section (90) forming an obtuse angle (α) relative to the driving direction (92), a second rear section (94) in the area of the lower milling head (28), this section (94) likewise forming an obtuse angle relative to the driving direction (92), and a third central section (96) interconnecting the first and the second sections (90, 94).

24. Machine as set forth in claim 23, **characterized in that**
(a) the shovel pan (84) has an outlet edge (86), which extends parallel to the driving direction (92) above the conveying device (66), and
(b) the shovel pan (84) is curved such that is guides material being taken up to the outlet edge (86).

## Revendications

1. Machine destinée à déplacer des tas munie d'un dispositif de fraisage (28,30) guidé dans un sens de la marche latéralement le long d'un tas et grâce auquel une couche de matière est susceptible d'être enlevée du tas par fraisage à chaque passage, et munie d'un convoyeur (66) sur lequel tombe la matière enlevée par fraisage et qui est destiné à déposer la matière à un endroit décalé par rapport au tas, **caractérisée par le fait que** le dispositif de fraisage présente deux têtes de fraisage (28,30) rotatives disposées latéralement dont les axes de rotation (34,36) s'étendent sensiblement dans le sens de la marche ou forment, avec le sens de la marche, un angle aigu.

2. Machine selon la revendication 1, **caractérisée par le fait que** les têtes de fraisage (28,30) sont en forme de disque ou d'assiette.

3. Machine selon la revendication 2, **caractérisée par le fait que** les têtes de fraisage (28,30) forment à chaque fois une assiette incurvée dans le sens de la marche et pourvue sur sa face avant d'organes de fraisage (32).

4. Machine selon la revendication 3, **caractérisée par le fait que** les têtes de fraisage (28,30) sont en forme de cône tronqué.

5. Machine selon l'une des revendications 1 à 4, **caractérisée par le fait que** les têtes de fraisage (28,30) sont disposées l'une au-dessus de l'autre.

6. Machine selon la revendication 5, **caractérisée par le fait qu**'un plan traversant les axes de rotation (34,36) des têtes de fraisage (28,30) est incliné en direction du tas par rapport à un angle empêchant l'effondrement du tas dans le plan de fraisage (76).

7. Machine selon la revendication 5 ou 6, **caractérisée par le fait que** la tête de fraisage supérieure (30) est décalée par rapport à la tête de fraisage inférieure (28) dans le sens inverse au sens de la marche.

8. Machine selon l'une des revendications 1 à 7, **caractérisée par le fait que,** sur la partie opposée au tas, les têtes de fraisage (28,30) sont recouvertes d'un capot (60) grâce auquel la matière enlevée par fraisage est guidée sur le convoyeur (66).

9. Machine selon l'une des revendications 1 à 8, **caractérisée par le fait que** les têtes de fraisage (28,30) ont le même sens de rotation.

10. Machine selon la revendication 9, **caractérisée par le fait que** les têtes de fraisage (28,30) tournent avec un nombre de tours supérieur à 100 tr/min.

11. Machine selon l'une des revendications 1 à 10, **caractérisée par** des moyens destinés à amener de l'eau à la matière transportée sur le convoyeur.

12. Machine selon l'une des revendications 1 à 11, **caractérisée par le fait que** la machine est développée en unité sans dispositif d'entraînement maintenue à un véhicule porteur (10) et susceptible d'être entraînée par la prise de force (20) du véhicule porteur (10).

13. Machine selon la revendication 12, **caractérisée par le fait que**
(a) un organe de guidage (74) est maintenu au véhicule porteur (10) perpendiculairement au sens de la marche,
(b) la machine est guidée sur l'organe de guidage (74) de façon susceptible d'être déplacée à l'aide d'un dispositif de guidage et
(c) il est prévu un servomoteur (80) grâce auquel la machine est susceptible d'être déplacée sur l'organe de guidage par rapport au véhicule porteur en partant d'une position de fonctionnement dans laquelle les têtes de fraisage (28,30) font saillie latéralement pour se mettre en position de marche rentrée dans laquelle les têtes de fraisage (28,30) se trouvent à l'intérieur d'un profil autorisé pour le fonctionnement en marche.

14. Machine selon la revendication 13, **caractérisée par le fait que**
(a) l'organe de guidage (74) est un tuyau sur lequel la machine est guidée à l'aide d'épaulements (76,78) mordant sur le pourtour du tuyau,
(b) un cylindre de réglage hydraulique (80) est disposé dans le tuyau et
(c) le cylindre de réglage (80) mord sur la machine susceptible d'être déplacée en traversant une fente longitudinale du tuyau.

15. Machine selon la revendication 14, **caractérisée par le fait que** le convoyeur (66) est susceptible d'être rentré à des fins de transport.

16. Machine selon l'une des revendications 1 à 15, **caractérisée par le fait qu**'une pelle (84) guidée sur le sol et destinée à ramasser la matière tombée par terre est disposée en dessous des têtes de fraisage (28,30).

17. Machine selon la revendication 16, **caractérisée par le fait que** la pelle (84) s'étire avec une arête de déversement (86) sur le convoyeur (66) de telle façon que la matière ramassée est poussée sur le convoyeur (66).

18. Machine selon la revendication 16 ou 17, **caractérisée par le fait que** la machine s'appuie hydrauliquement sur le véhicule porteur (10) de telle façon que les roues du véhicule porteur (10) prennent en charge la plus grande partie du poids de la machine.

19. Machine selon la revendication 18, **caractérisée par le fait que** des galets support (64) touchant le sol et prenant en charge le poids restant de la machine sont prévus sur la machine.

20. Machine selon la revendication 19, **caractérisée par le fait que** la machine s'appuie sur les galets support (64) par l'intermédiaire de ressorts (63).

21. Machine selon les revendications 7 et 16, **caractérisée par le fait que** l'arête avant (88) de la pelle (84) est étagée en fonction du déplacement longitudinal des têtes de fraisage (28,30).

22. Machine selon la revendication 21, **caractérisée par le fait que** l'arête avant (88) de la pelle (84) est affûtée.

23. Machine selon la revendication 22, **caractérisée par le fait que** l'arête avant (88) de la pelle (84) présente une première section avant (90) dans le domaine de la tête de fraisage supérieure (30) formant, avec le sens de la marche (92), un angle obtus (α), une deuxième section arrière (94) dans le domaine de la tête de fraisage inférieure (28), cette section (94) formant également, avec le sens de la marche, un angle obtus, et une troisième section médiane (96) reliant la première et la deuxième section (90,94).

24. Machine selon la revendication 23, **caractérisée par le fait que**
(a) la pelle (84) présente une arête de déversement (86) s'étirant sur le convoyeur (66) parallèlement au sens de la marche (92), et
(b) la pelle (84) est incurvée de telle façon qu'elle guide la matière ramassée vers l'arête de déversement (86).
